# EUROPÄISCHE PATENTSCHRIFT

(11) **EP 1 659 016 B1**
(45) Veröffentlichungstag und Bekanntmachung des Hinweises auf die Patenterteilung: **01.08.2007**
(21) Anmeldenummer: 05024264.3
(22) Anmeldetag: 08.11.2005
(51) Int. Cl.: B60J 7/20, E05F 15/04

(54) **Antriebsanordnung für ein Fahrzeugteil**
Drive assembly for a vehicle part
Ensemble d'entraînement pour une partie de véhicule

(30) Priorität: 23.11.2004 DE 102004056657
(43) Veröffentlichungstag der Anmeldung: 24.05.2006
(73) Patentinhaber: CTS Fahrzeug-Dachsysteme GmbH, 74321 Bietigheim-Bissingen (DE)
(72) Erfinder: Döffinger, Stefan, 71263 Weil der Stadt (DE); Johe, Ralf, 74391 Erligheim (DE)
(74) Vertreter: Wittner, Walter

(56) Entgegenhaltungen:
- DE-A1- 19 912 887
- DE-C1- 19 959 700
- DE-U1- 8 913 486
- FR-A- 2 834 950
- US-A1- 2001 042 998

## Beschreibung

Die Erfindung betrifft eine Antriebsanordnung für einen Heckdeckel eines Fahrzeuges mit offenem Aufbau gemäß dem oberbegriff des Anspruches 1.

Antriebsanordnungen der vorgenannten Art sind aus der DE 195 16 876 C1 bekannt. Der Heckdeckel ist über einen Hilfsrahmen - als Zwischenträger - getragen und mit dem Fahrzeugaufbau verbunden. Zusammen mit dem Hilfsrahmen, und festgelegt gegenüber diesem, wird der Heckdeckel um eine bezogen auf die Fahrtrichtung des Fahrzeuges hinten liegende Schwenkachse nach hinten oben in eine Öffnungslage verschwenkt, in der der Zugang zu einem heckseitigen Ablageraum für die zu öffnende Dachkonstruktion, sei es als Hardtop oder als Softtop, freigegeben ist. In seiner diesen Zugang zum Ablageraum versperrenden Schließlage ist der zum Hilfsrahmen festgelegte Heckdeckel über eine dem Hilfsrahmen zugeordnete Verriegelung im vorderen Bereich des hinteren Radhauses des Fahrzeuges gegen den Aufbau zu fixieren. Der Zugang zum über den Heckdeckel in seiner Schließlage rückwärtig überdeckten Kofferraum des Fahrzeuges wird dadurch freigegeben, dass bei gegen dem Aufbau des Fahrzeuges festgelegtem Hilfsrahmen der Heckdeckel zum Hilfsrahmen um eine im vorderen Endbereich des Hilfsrahmens liegende Schwenkachse nach vorne oben in eine entsprechende Öffnungslage zu verschwenken ist.

Zur Verschwenkung des Hilfsrahmens und des mit diesem verkoppelten Heckdeckels ist der Hilfsrahmen längs der Fahrzeuges beidseits über ein Linearstellglied angrenzend an den hinteren unteren Bereich des rückwärtigen Radhauses aufbauseitig abgestützt. Diese Abstützung erfolgt am Fußende des als Linearstellglied verwendeten hydraulischen Stellzylinders, der mit seiner Kolbenstange am Hilfsrahmen angelenkt ist, über eine Drehschiebeführung, welche durch eine in Achsrichtung des Stellzylinders verlaufende zylinderseitige Langlochführung und einen am Aufbau lagefest gehaltenen Drehzapfen gebildet ist. Aufgrund der Drehschiebeführung in Verbindung mit der Verschwenkbarkeit des Hilfsrahmens ist der als Linearstellglied verwendete Stellzylinder jeweils in einer Fahrzeuglängsebene verschwenkbar, sowie auch in Abhängigkeit von der Belastungsrichtung - Zug- oder Druckrichtung als Einfahr- bzw. Ausfahrrichtung des Linearstellgliedes - zwischen einer oberen Anschlagstellung bei Zugbelastung (Einfahrrichtung) und einer unteren Anschlagstellung bei Druckbelastung (Ausfahrrichtung) über den durch die Langlochführung vorgegebenen Stellweg verlagerbar. Diese Stellbewegung des Stellzylinders zum aufbaufesten Drehzapfen der in der Anlenkung des Stellzylinders zum Aufbau vorgesehenen Drehschiebeführung wird zur Betätigung der Verriegelungsvorrichtung zwischen Hilfsrahmen und Aufbau unter Verwendung einer Übertragungseinrichtung, beispielsweise einer Seilzugverbindung genutzt.

Zur Umstellung von Hilfsrahmen und Heckdeckel in die nach hinten oben aufgeschwenkte, den Zugang zum Ablageraum freigebende Öffnungslage sind die als Stellzylinder ausgebildeten Linearstellglieder zumindest so lange druckbeaufschlagt auszufahren, bis die aufgeschwenkte Öffnungslage erreicht ist.

In Abhängigkeit von der Gewichtsverteilung und/oder von sonstigen, auf den Heckdeckel wirkenden Kräften, so beispielsweise Windkräften kann der Heckdeckel mit dem zum Heckdeckel lagefesten Hilfsrahmen um die hintere untere Schwenkachse des Hilfsrahmens auch belastungsbedingt zwischen den Anschlagstellungen der Langlochführung schwenken. So können sich, wenn der Heckdeckel mit zugeordnetem Hilfsrahmen in einer nach hinten oben aufgeschwenkten Öffnungslage unter Druckbeaufschlagung des Linearstellgliedes abgestützt ist, belastungsbedingt, beispielsweise wiederum durch Windkräfte, Krafteinwirkungen auf den Heckdeckel ergeben, durch die dieser über die unter Druckbelastung des Linearstellgliedes abgestützte Lage hinaus in Öffnungsrichtung verschwenkt wird, sodass das Linearstellglied nunmehr ausgehend vom Heckdeckel zugbelastet ist.

Solche Umstellungen zwischen Zug- und Druckbelastung können aufgrund der Längsverstellbarkeit des Drehzapfens innerhalb der Langlochführungen zu schlagenden Geräuschen führen, die als störend empfunden werden, und bedingen gegebenenfalls auch anderweitig konstruktive Vorkehrungen bezüglich der Ausgestaltung des Linearstellgliedes, wobei zu berücksichtigen ist, dass, in Abhängigkeit von konstruktiven Gegebenheiten, auch verhältnismäßig kurze Stellwege zwischen den Anschlagstellungen des Drehzapfens in der Langlochführung verhältnismäßig große Schwenkwege des Heckdeckels nach sich ziehen können, mit entsprechenden Beschleunigungen und daraus resultierenden, abzufangenden Kräften.

Bei einer weiteren, aus der DE 89 13 486 U1 bekannten Antriebsanordnung für Fahrzeugdeckel, insbesondere Verdeckkastendeckel für Cabriolets, ist der Fahrzeugdeckel um eine karosserieseitige Schwenkachse über zumindest ein karosserieseitig schwenkbar abgestütztes Linearstellglied zwischen einer Schließlage und einer nach hinten oben aufgeschwenkten Öffnungslage verstellbar und in der Schließlage an seinem zur hinteren karosseriefesten Schwenkachse abgelegenen vorderen Ende verriegelt. Hierzu ist ein schwenkbares, über das Linearstellglied angetriebenes Verriegelungselement vorgesehen, das beim Verschwenken des Heckdeckels in die Schließlage über das Linearstellglied in seine Verriegelungslage geschwenkt wird. Das Verriegelungselement wird somit, ebenso wie der Fahrzeugdeckel, in Abhängigkeit von der jeweiligen Stelllänge des Linearstellgliedes verschwenkt, in Richtung auf seine Verriegelungslage durch Einfahren in seine Verriegelungsstellung wegbegrenzt, in Gegenrichtung, also in Richtung auf seine Freigabelage, anschlagbegrenzt.

Zur Sicherung der Verriegelungslage des Verriegelungselementes ist eine federbelastete, in das Verriegelungselement einrastende Sperrklinke vorgesehen. Um diese zur Verschwenkung des Verriegelungselementes in seine Freigabelage aus ihrer Sperrlage auszurücken, ist die Anlenkung zwischen dem Linearstellglied und Verriegelungselement als Drehschiebeführung ausgebildet, die seitens des Linearstellgliedes als Langlochführung und seitens des Verriegelungselementes als zum Verriegelungselement lagefester Drehzapfen gestaltet ist. Durch die Drehschiebeführung ergibt sich, stellrichtungsabhängig, ein der Länge der Langlochführung entsprechender Überdeckungsbereich zwischen der Sperrklinke und dem Linearstellglied, der genutzt wird, um bei Beaufschlagung des Verriegelungselementes in Richtung auf seine Freigabelage die Sperrklinke aus ihrer Sperrlage auszurücken und damit die Verschwenkung des Verriegelungselementes in dessen Anschlaglage zum Fahrzeugdeckel zu ermöglichen, in der der Fahrzeugdeckel über das zwischengeschaltete Verriegelungselement von dem Linearverstellglied in seine Öffnungslage aufgestellt werden kann.

Der Erfindung liegt die Aufgabe zugrunde, vorstehend angesprochene willkürliche, durch äußeren Kraftangriff und/oder durch Verlagerung des Schwerpunktes zur durch die Linearstellglieder vorgegebenen Stützebene bedingte Bewegungen von Heckdeckel und Hilfsrahmen in kritischen Schwenkwinkelbereichen zu vermeiden.

Gemäß der Erfindung wird dies mit den Merkmalen des Anspruches 1 erreicht, denen zufolge das zumindest eine Linearstellglied zur über die Drehschiebeführung angelenkten Karosserie in einer druckseitigen Anschlaglage der Drehschiebeführung in Abhängigkeit vom Schwenkwinkel über einen vorgegebenen Schwenkwinkelbereich formschlüssig gehalten ist. Eine solche formschlüssige, schwenkwinkelabhängige Halterung wird aufgrund der mit der Veränderung des Schwenkwinkels verbundenen Änderung der Relativlage im Bereich der Drehschiebeführung durch Einfahren von Halteteilen in eine wechselseitige Überdeckungslage erreicht und ergibt sich im vorgesehenen Verriegelungsbereich selbsttätig beim Einschwenken des Linearstellgliedes in den vorgegebenen Schwenkwinkelbereich, bedingt somit keine eigenständige Ansteuerung.

Die schwenkwinkelabhängige, formschlüssige Halterung, die bezogen auf die angesprochenen willkürlichen Verlagerungen zu einer Absicherung einer Anschlaglage unabhängig von der Stell- bzw. Belastungsrichtung des Linearstellgliedes führt, erfolgt in dem Schwenkwinkelendbereich, der auf die nach hinten oben geöffnete Endlage des Heckdeckels ausläuft.

Durch die schwenkwinkelabhängige, formschlüssige Fixierung des Linearstellgliedes in dieser seiner der Druckbeaufschlagung entsprechenden Endlage lässt sich nicht nur diese Endlage bezogen auf eine vorgegebene Ausfahrlänge des Linearstellgliedes sichern, sondern insbesondere auch erreichen, dass der Heckdeckel bzw. Hilfsrahmen und Heckdeckel nicht nach hinten um einen dem Freigang zwischen druckseitiger und zugseitiger Anschlaglage entsprechenden Schwenkwinkel abkippen kann. Eine entsprechende Verriegelung schließt somit auch aus, dass äußere Kräfte - wie beispielsweise Windkräfte oder durch sonstige Beaufschlagungen des Heckdeckels bedingte Belastungen, wie etwa durch sich abstützende Personen - zu willkürlichen Verlagerungen des Heckdeckels im Rahmen des Freigangs zwischen den Anschlaglagen führen, wobei auch diesbezüglich der rückwärtige, der Öffnungsstellung des Deckels zugeordnete Schwenkbereich kritisch ist, da der Deckel so, insbesondere bei langsamer Fahrt, Windkräften besonders ausgesetzt ist und zudem auch in dieser, wenn auch nur kurzzeitig aufgestellten Lage geradezu dazu einlädt, sich darauf, zum Beispiel zur Beobachtung des Ablagevorganges des Fahrzeugverdecks, abzustützen.

Im Rahmen der Erfindung sind die zur Sicherung der Anschlaglage vorgesehenen Halteteile als sich entgegengesetzt zueinander in Schwenkrichtung erstreckende Teile ausgebildet, die im Überlappungsbereich bevorzugt im Wesentlichen gleiche Erstreckung aufweisen, wobei die Größe des Überlappungsbereiches zur Größe des Schwenkwinkelbereiches korreliert, über den die angestrebte formschlüssige Abstützung erreicht werden soll.

In bekannter Weise ist die erfindungsgemäße Lösung einer formschlüssigen Verriegelung der Drehschiebeführung, bevorzugt durch entsprechende Übertragungsmittel, mit einer dem vorderen Deckelbereich zugeordneten, der Verriegelung des Deckels in seiner Schließlage dienenden Verriegelung kombiniert, sodass durch entsprechende Ansteuerung des Linearstellgliedes zum Offnen und Schließen des Heckdeckels gleichzeitig dessen Ver- und/oder Entriegelung bzw. die Ver- und/oder Entriegelung des diesen tragenden Hilfsrahmens gegen dem Fahrzeugaufbau im vorderen Endbereich des Heckdeckels erreicht werden kann.

Eine entsprechende Lösung für die Ver- bzw. Entriegelung des den Heckdeckel tragenden Hilfsrahmens gegenüber dem Aufbau zeigt auch die DE 195 16 877 C1.

Weitere Einzelheiten und Merkmale der Erfindung ergeben sich aus den Ansprüchen. Ferner wird die Erfindung nachstehend anhand eines Ausführungsbeispieles erläutert. Es zeigen:

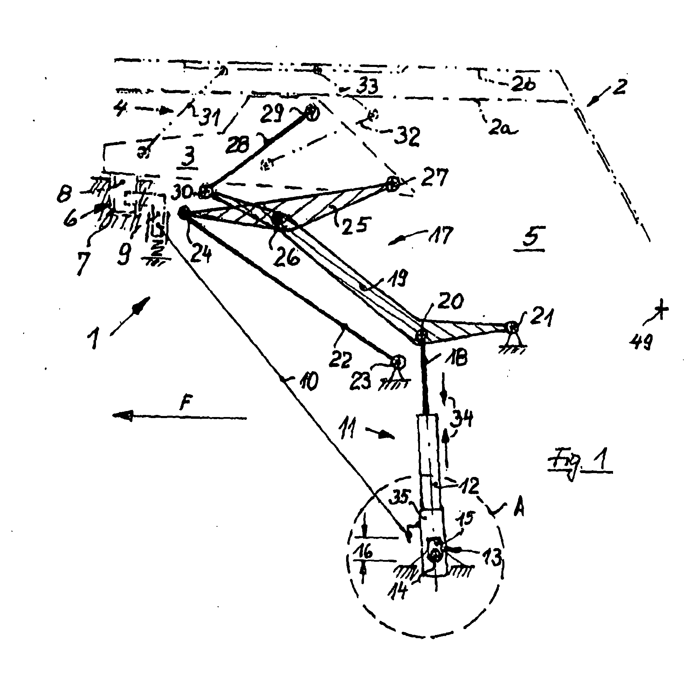

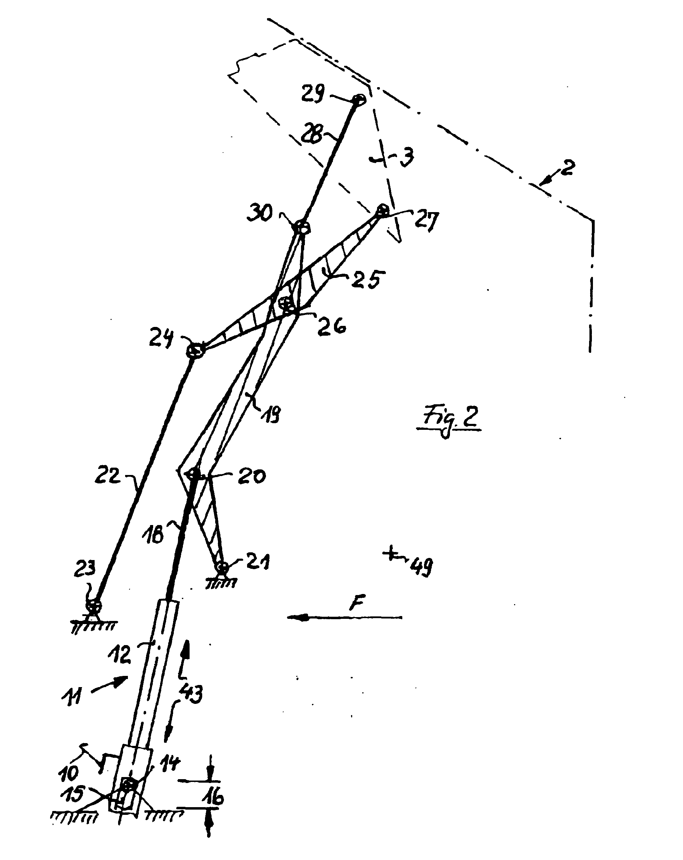

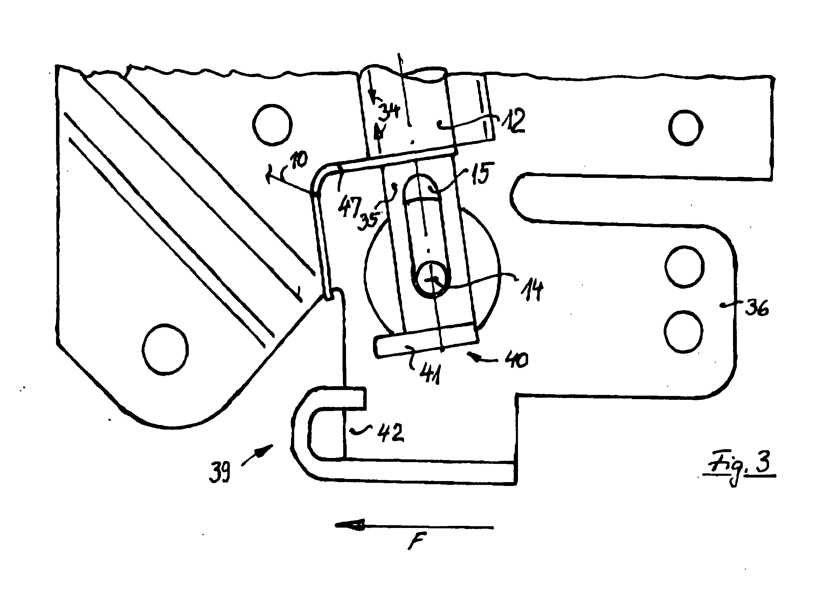

- Fig. 1: eine isolierte, schematisierte Darstellung einer Verstellvorrichtung für den Heckdeckel eines Fahrzeuges, dessen Aufbau lediglich bezüglich der aufbauseitigen Anlenkpunkte für die Verstellvorrichtung angedeutet ist und dessen Heckdeckel bezogen auf die Darstellung in Uberdeckung zu einem endseitig dem Fahrzeug zugeordneten Kofferraum vorgesehen ist, der bereichsweise auch den Ablageraum für die als Hard- oder Softtop ausgebildete, öffnungsfähige Dachabdeckung des Fahrzeuges bildet, wobei die Verriegelungsvorrichtung an einem Zwischenträger angreift, der zusammen mit dem Heckdeckel in eine nach hinten oben aufgeschwenkte Öffnungslage für den Heckdeckel verschwenkbar ist und gegenüber dem der Heckdeckel in eine nach vorne oben aufgeschwenkte Öffnungslage zu verschwenken ist, in der der vom Heckdeckel in dessen Schließlage überdeckte Raum als Kofferraum von hinten zugänglich ist,
- Fig. 2: die in Fig. 1 veranschaulichte, am Zwischenträger angreifende Verstellvorrichtung zusammen mit dem Zwischenträger in einer der Öffnungslage des Heckdeckels nach hinten oben entsprechenden Stellung, sowie in
- Fig. 3 bis 5: vergrößerte Ausschnittsdarstellungen der aufbauseitigen Anlenkung des der Verstellvorrichtung zugeordneten Linearstellgliedes, entsprechend einem Ausschnitt A in Fig. 1, verschiedenen Stelllagen des Linearstellgliedes und in schematisierter Seitenansicht, und
- Fig. 6: eine perspektivische Darstellung des Ausschnittes A in einer der Fig. 4 entsprechenden Stellung des Linearstellgliedes.

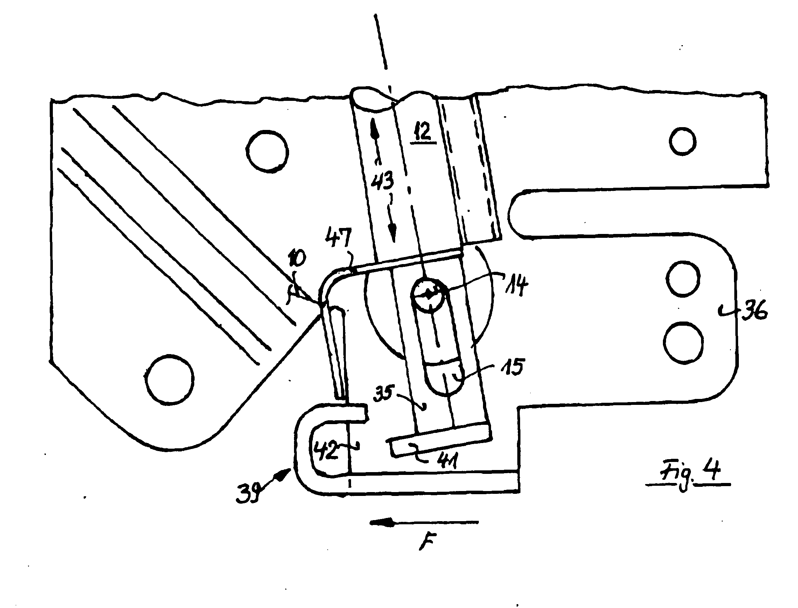

Bezogen auf die Fahrtrichtung F ist in den Fig. 1 und 2 in Seitenansicht die Verstellvorrichtung 1 für den in Strichpunktlinien angedeuteten Heckdeckel 2 eines nicht weiter gezeigten Fahrzeuges mit offenem Aufbau dargestellt, dessen Heckdeckel 2 zur Ablage des öffnungsfähigen, als Hardtop oder Softtop ausgebildeten Fahrzeugdaches aus seiner Schließlage gemäß Fig. 1 in eine Öffnungslage gemäß Fig. 2 verstellbar ist, wobei der Heckdeckel 2 in dieser öffnungslage nach hinten oben aufgeschwenkt ist.

Fig. 1 und 2 veranschaulichen weiter, dass der Heckdeckel 2 über einen schematisiert strichliert angedeuteten Zwischenträger 3, der auch Rahmenform aufweisen kann, mit der Verstellvorrichtung 1 verbunden ist. In einer unmittelbaren Verbindung zum Zwischenträger 3 ist der Heckdeckel 2 in einer Strichpunktdarstellung als Heckdeckel 2a veranschaulicht.

Um den Heckdeckel 2 gegebenenfalls auch in eine nach vorne oben aufgeschwenkte Öffnungslage verstellen zu können, und zwar bei in einer der Schließlage des Heckdeckels 2 entsprechenden Positionierung der verstellvorrichtung 1, ist in Fig. 1 für den Heckdeckel 2 bezogen auf dessen Darstellung 2b als Strich-Doppelpunktlinie des Weiteren die Möglichkeit angedeutet, diesen mit dem Zwischenträger 3 über ein weiteres Gestänge 4 zu verbinden, das nur schematisch angedeutet ist und das die Verstellung des Heckdeckels 2 in die nicht dargestellte, nach vorne oben aufgeschwenkte Öffnungslage ermöglicht, sodass der Zugang zu dem über den Heckdeckel 2 in seiner Schließlage abgedeckten Raum 5 als Kofferraum von der Rückseite des Fahrzeuges möglich ist.

In der in Fig. 1 dargestellten Schließlage des Heckdeckels 2 ist dieser, bei gegebenenfalls rückwärtiger, hier nur angedeuteter, direkter oder indirekter Anlenkung und Führung zum Aufbau derart, dass eine reelle oder imaginäre, gegebenenfalls auch lageveränderliche Schwenkachse 49 als Momentanschwenkachse für den Heckdeckel 2 und den Zwischenträger 3 gegeben ist, frontseitig über den Zwischenträger 3 gegen den Aufbau verriegelt. Die entsprechende Verriegelungsvorrichtung 6 umfasst eine aufbauseitige Aufnahme 7, in die ein dem Zwischenträger 3 zugeordnetes Eingriffsglied 8 eintaucht, das in der Aufnahme über ein angedeutetes Riegelglied 9 zu fixieren ist, welches über eine Übertragungseinrichtung, beispielsweise ein angedeutetes Zugglied 10 zumindest in seine Freigabelage zu verstellen ist. Als Übertragungseinrichtung kommen beispielsweise Zugglieder 10 in Form von Bowdenzügen, für die erweiterte Funktion der Verstellung des Regelgliedes in Zug- und Druckrichtung gegebenenfalls auch zugdrucksteife Übertragungsglieder in Frage.

Die Verstellung in die Freigabelage erfolgt in der Schemadarstellung abhängig davon, ob ein als Linearstellglied 11 vorgesehener Stellzylinder 12 zur Verstellung des Heckdeckels 2 in seine nach hinten oben aufgestellte Öffnungslage gemäß Fig. 2 auf Druck beaufschlagt, und damit ausgefahren wird.

Bezogen auf die Darstellung der Verriegelungsvorrichtung 6 ist in Verbindung mit einem Zugglied 10 als Übertragungseinrichtung im Ausführungsbeispiel eine federnde Rückstellung des verschiebbar geführten Riegelgliedes 9 in seine Riegellage als weitere im Rahmen der Erfindung liegende Möglichkeit angedeutet.

Der Stellzylinder 12 ist aufbauseitig über eine Drehschiebeführung 13 angelenkt, die einen aufbauseitig festgelegten Drehzapfen 14 umfasst, der in eine dem Fußteil 35 des Stellzylinders 12 zugeordnete, in Achsrichtung des Stellzylinders 12 sich erstreckende Langlochführung 15 eingreift, wodurch sich, entsprechend der Beaufschlagung des Stellzylinders 12 in Zug- oder Druckrichtung, voneinander beabstandete Anlage- und Anschlagstellungen des Stellzylinders 12 gegen den aufbauseitig festgelegten Drehzapfen 14 ergeben. Der diesbezügliche Stellweg ist bei 16 angedeutet, und wird, wie schematisch veranschaulicht, über die als Zugglied 10 veranschaulichte Übertragungseinrichtung in Stellbewegungen des Riegelgliedes 9 umgesetzt. Entsprechende Ausgestaltungen sind beispielsweise der DE 195 16 876 C1 und der DE 195 16 877 C1 zu entnehmen.

Der das Linearstellglied 11 bildende Stellzylinder 12 wirkt seinerseits über die Verstellvorrichtung 1 auf den Zwischenträger 3, wobei die Verstellvorrichtung 1 im Ausführungsbeispiel durch ein als Siebengelenk gestaltetes Verstellgestänge gebildet ist. Andere Ausgestaltungen von Verstellgestängen oder Führungen in der Verbindung des Zwischenträgers 3 zum Aufbau sind bekannt und im Rahmen der Erfindung ebenfalls einsetzbar. Ferner ist die Erfindung auch bei unmittelbarer Abstützung des Linearstellgliedes 11 zwischen Aufbau und Zwischenträger 3 bzw. Heckdeckel 2 anwendbar und realisierbar.

Das Verstellgestänge 17 umfasst den mit der Kolbenstange 18 des Stellzylinders 12 verbundenen Antriebslenker 19, an dem die Kolbenstange 18 im Anlenkpunkt 20 eingreift und der seinerseits aufbauseitig im Anlenkpunkt 21 schwenkbar abgestützt ist. Etwa parallel zum Antriebslenker 19, und gegenüber diesem in Fahrtrichtung F nach vorne versetzt, verläuft ein Steuerlenker 22, der aufbauseitig im Anlenkpunkt 23 angebunden ist und der an seinem dem Anlenkpunkt 23 gegenüberliegenden Ende in einem Anlenkpunkt 24 an einem Zwischenlenker 25 angreift. Der Zwischenlenker 25 erstreckt sich ausgehend vom Anlenkpunkt 24 entgegen der Fahrtrichtung F überkreuzend zum Antriebslenker 19 und ist in seinem längsmittleren Bereich in einem Anlenkpunkt 26 verschwenkbar mit dem Antriebslenker 19 verbunden. Das zum Anlenkpunkt 24 gegenüberliegende Ende des Zwischenlenkers 25 ist im Anlenkpunkt 27 verschwenkbar mit dem Zwischenträger 3 verbunden. Am Zwischenträger 3 greift weiter, bezogen auf die dargestellte Schließlage, ein in grober Annäherung parallel zum Zwischenlenker 25 sich nach hinten erstreckender Stützlenker 28 in einem Anlenkpunkt 29 an, und es ist der Stützlenker 28 an seinem anderen vorderen Ende mit dem vom aufbauseitigen Anlenkpunkt 21 des Antriebslenkers 19 abgelegenen Ende desselben in einem Anlenkpunkt 30 verbunden. Die Anlenkpunkte 27 und 29 liegen auf einer Geraden, die zu einer die Anlenkpunkte 26 und 30 verbindenden Geraden etwa parallel liegt.

In grober Annäherung ist das Verstellgestänge 17 somit im Wesentlichen als Siebengelenk aus zwei Lenkerparallelogrammen aufgebaut, die mit dem Anlenkpunkt 26 zwischen Antriebslenker 19 und Zwischenlenker 25 einen gemeinsamen Gelenkpunkt aufweisen.

Das weitere Gestänge 4 zwischen Zwischenträger 3 und Heckdeckel 2, das zur Veranschaulichung einer Verstellmöglichkeit des Heckdeckels 2 in eine nach vorne oben aufgestellte Öffnungslage angedeutet ist, umfasst Gestängelenker 31, 32 und 33 und bedarf im Hinblick auf die Erfindung keiner näheren Beschreibung.

In der Schließstellung des Heckdeckels 2 gemäß Fig. 1 erstrecken sich der Antriebslenker 19 und der Steuerlenker 22 schräg nach vorne und oben und es greift der Stellzylinder 12 bei leichter Neigung nach vorne und im Wesentlichen aufrechter Erstreckung zwischen den Anlenkpunkten 21 und 23 am Antriebslenker 19 an.

Zur Verstellung des Heckdeckels 2 in seine nach hinten oben verschwenkte und die nicht dargestellte Ablageöffnung für das öffnungsfähige Dach in den Raum 5 freigebende Stellung, die in Fig. 2 gezeigt ist, wird das Verstellgestänge 17 durch Ausfahren des Stellzylinders 12 in eine im Wesentlichen in Richtung des Stellzylinders 12 sich erstreckende Strecklage verschwenkt, wobei der Stellzylinder 12 aus seiner leicht nach vorne geneigten Erstreckung gemäß Fig. 1 in eine etwas nach hinten geneigte Stellung geschwenkt wird, entsprechend der Verlagerung des Anlenkpunktes 20 der Kolbenstange 18 am Antriebslenker 19 auf einer Kreisbahn um den aufbauseitigen Anlenkpunkt 21 des Antriebslenkers 19 bei Ausfahren des als Linearstellglied 11 eingesetzten Stellzylinders 12 durch Druckbeaufschlagung.

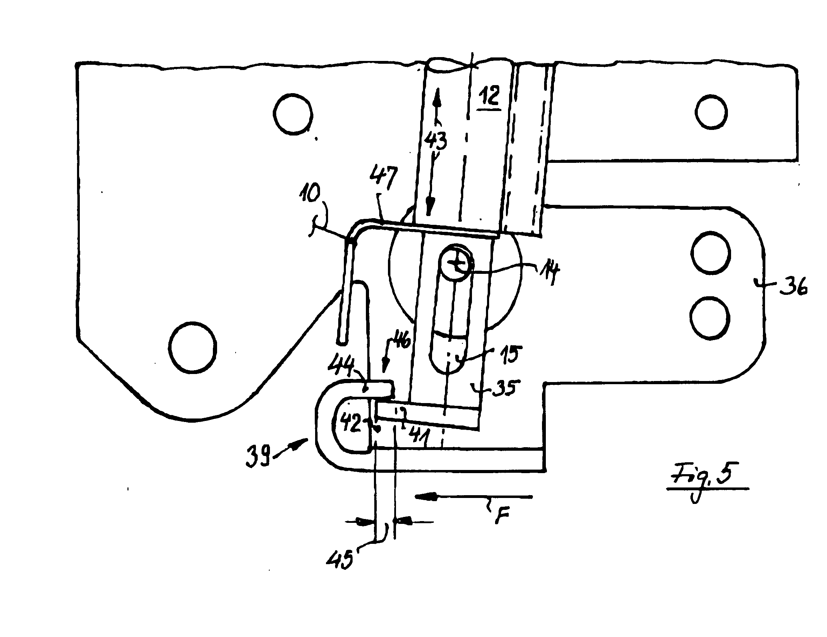

Fig. 1 zeigt die Verstellvorrichtung 1 bei geschlossenem Heckdeckel 2, wobei der Zwischenträger 3 über die Verriegelungsvorrichtung 6 gegen den Aufbau festgelegt ist. Zur Verrastung der Verriegelungsvorrichtung 6 wird das Eingriffsglied 8 in die Aufnahme 7 hineingezogen. Fig. 3 veranschaulicht in der dort gezeigten vergrößerten Darstellung des Ausschnittes A den Stellzylinder 12 in der in Fig. 1 gezeigten Position , also unter Beaufschlagung des Stellzylinders 12 in Zugrichtung, wie durch die gegeneinander gerichteten Pfeile 34 veranschaulicht. Aufgrund der Zugbelastung (Pfeile 34) nimmt der Stellzylinder 12 eine obere Anschlaglage zum aufbauseitig festgelegten Drehzapfen 14 ein, die einer Abstützung zwischen dem unteren Ende der Langlochführung 15 und dem Drehzapfen 14 entspricht.

Fig. 3 bis 6 zeigen des Weiteren, dass die aufbauseitige Anbindung des Drehzapfens 14, und damit die Abstützung des das Linearstellglied 11 bildenden Stellzylinders 12 über eine schematisch angedeutete Befestigungskonsole 36 erfolgt, die, wie in Fig. 6 gezeigt, einen sich nach oben öffnenden, U-förmig eingeschlagenen Bügel 37 aufweist, in dessen beiden Schenkeln 50, 51 der Drehzapfen 14 gehalten ist. Der Bügel 37 ist in Schwenkrichtung des Stellzylinders 12, und damit in Fahrtrichtung F offen und weist einen die Schenkel 50, 51 am unteren Ende verbindenden Steg 38 auf, der - als Verlängerung in Fahrtrichtung F - mit einer hakenförmigen Aufnahme 39 versehen ist, bei, bezogen auf das Ausführungsbeispiel, entgegen der Fahrtrichtung F sich öffnendem Haken. Am Fußteil 35 des Stellzylinders 12 ist korrespondierend zur Aufnahme 39 ein Eingriffsglied 40 vorgesehen, das in der hier gezeigten, einfachsten Ausgestaltung durch eine untere Abschlussplatte 41 des Fußteiles 35 gebildet ist.

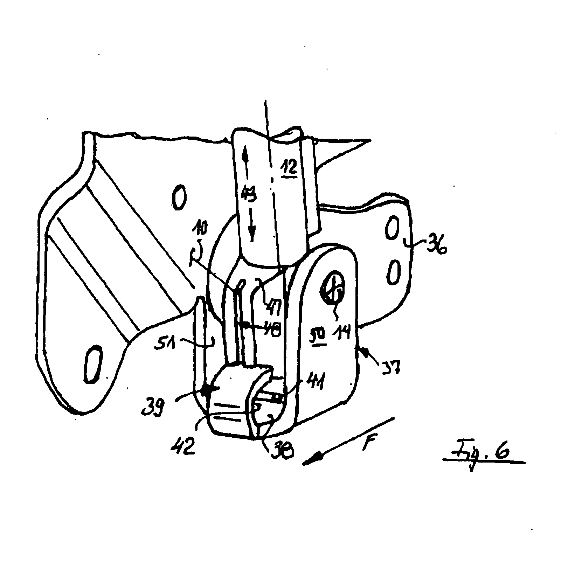

Fig. 3 und 4 veranschaulichen, dass die hakenförmige Aufnahme 39 und die das Eingriffsglied 40 bildende, in Richtung auf die Hakenöffnung 42 auskragende Abschlussplatte 41 - als Halteteile - in der Schwenkstellung des Stellzylinders 12 gemäß Fig. 3 und 4 in Achsrichtung des Stellzylinders 12 gegeneinander überlappungsfrei verstellbar sind, wenn der Stellzylinder 12 von Zug (Pfeile 34) auf Druck (Pfeile 43) umgeschaltet wird und aus seiner der Zugbelastung (Pfeile 34) entsprechenden oberen Anschlaglage zum Drehzapfen 14 gemäß Fig. 3 in eine der Druckbelastung (Pfeile 43) entsprechende untere Anschlaglage gemäß Fig. 4 und 5 verlagert wird, und zwar durch Längsverschiebung des Drehzapfens 14 in der Langlochführung 15 aus der oberen Anschlaglage gemäß Fig. 3 in die untere Anschlaglage gemäß Fig. 4. Durch die Druckbeaufschlagung des Stellzylinders 12 wird ausgehend von dessen der Fig. 3 entsprechenden, oberen Anschlag- und Schwenklage der Stellzylinder in seine untere Anschlaglage gemäß Fig. 4 verfahren und das Eingriffsglied 8 der Verriegelungsvorrichtung 6 aus der Aufnahme 7 nach oben ausgefahren, sodass die Blockierung des Heckdeckels 2 in seiner Schließlage über die Verriegelungsvorrichtung 6 aufgehoben ist und der über den Zwischenträger 3 mit dem Verstellgestänge 17 verbundene Heckdeckel 2 nach hinten oben aufgeschwenkt werden kann.

Diese Schwenkbewegung geht von einer der Fig. 4 entsprechenden Stellung des Stellzylinders 12 aus, und ist mit einer richtungsgleichen Schwenkbewegung, wie Fig. 2 veranschaulicht, des Stellzylinders 12 verbunden, sodass sich in der nach hinten oben aufgeschwenkten Lage des Heckdeckels 2 gemäß Fig. 2, bezogen auf die Endstellung, eine gegenüber der Darstellung gemäß Fig. 3 nach hinten oben geneigte Erstreckung des Stellzylinders 12 ergibt (Fig. 5), in der das Eingriffsglied 40, veranschaulicht durch die Abschlussplatte 41, in die Hakenöffnung 42 eingreift und den oberen, nach hinten gerichteten Schenkel 44 der hakenförmigen Aufnahme 39 untergreift. Hierbei ergibt sich, bezogen auf die dargestellte Endlage in Fig. 5, ein Überlappungsbereich 45, sodass eine entsprechende Überlappung nicht nur in der Endlage, sondern auch im auf die Endlage zulaufenden Schwenkwinkelbereich gegeben ist.

Durch den Überlappungsbereich 45 ist ein auf die hintere, der nach hinten oben aufgestellten Öffnungsendlage des Heckdeckels 2 auslaufender Schwenkwinkelbereich bestimmt, in dem durch die schwenkwinkelabhängige Überlappung zwischen der Aufnahme 39 und dem Eingriffsglied 40 für den Stellzylinder 12 eine Abstützung 46 unabhängig davon gegeben ist, ob - nach Einschwenken in die Uberlappungslage - der Stellzylinder 12 zug- oder druckbeaufschlagt ist. Aufgrund der durch die Überlappung erreichten Abstützung wird die der Druckbeaufschlagung (Pfeile 43) zugeordnete obere Anschlaglage des Drehzapfens 14 in der Langlochführung 15, entsprechend einer unteren Anschlaglage für den Stellzylinder 12, aufrechterhalten.

Für den geschilderten Funktionsablauf ist, wie die Fig. 1 und 2 veranschaulichen, Ausgangspunkt, dass der Deckel 2 aus der Schließlage gemäß Fig. 1 durch Druckbeaufschlagung des Stellzylinders 12 in Richtung auf die öffnungslage gemäß Fig. 2 beaufschlagt wird, und zwar zumindest soweit, bis bei Druckbeaufschlagung des Stellzylinders 12 die Aufnahme 39 und das Eingriffsglied 40 in Überlappung zueinander gelangen. Ausgehend von dieser Position kann die weitere Verstellung des Heckdeckels 2 in die Öffnungslage gemäß Fig. 2 auch unter Randbedingungen, zum Beispiel schwerpunktabhängig oder unter dem Einfluss äußerer Kräfte, wie Windkräfte, erfolgen, die von durch die druckseitige Beaufschlagung des Stellzylinders 12 bedingten Stellkräften unabhängig sind und die gegebenenfalls zu einer Zugbelastung des Stellzylinders 12 führen, ohne dass die der Druckstellung des Stellzylinders 12 entsprechende obere Anschlaglage des Drehzapfens 14 in der Langlochführung 15, also die untere Anschlaglage des Stellzylinders 12, verlassen werden kann.

Dies gilt auch bei Verlagerung des Heckdeckels 2 aus seiner nach hinten oben geschwenkten Offnungsendlage gemäß Fig. 2 in Richtung auf seine Schließlage gemäß Fig, 1, wobei ausgehend von der Endlage gemäß Fig. 2 über den Stellzylinder 12 zunächst Zugkräfte aufgebracht werden müssen, bevor im weiteren Verlauf der Schließbewegung des Heckdeckels 2 eine der Druckbeaufschlagung entsprechende Abstützung desselben notwendig oder zumindest zweckmäßig ist, um ein Einsacken in Richtung auf die Verriegelungsstellung zu vermeiden.

Die Umstellung von Zug- auf Druckbelastung für den Stellzylinder 12 hätte ohne die erfindungsgemäß vorgesehene Abstützung im öffnungsseitigen Schwenkendbereich ein Umschlagen des Drehzapfens 14 zwischen den Anschlaglagen in der Langlochführung 15 zur Folge, das sowohl unter Belastungsgesichtspunkten wie unter den Gesichtspunkten der Geräuschentwicklung unerwünscht ist, zumal ohne eine erfindungsgemäße, durch die Überlappung erreichte Abstützung 46 auch Windkräfte oder sonstige Belastungen eine willkürliche Umstellung des Drehzapfens zwischen den Endlagen in dem kritischen öffnungsseitigen Schwenkendbereich zur Folge haben können, zumal für den Heckdeckel 2 gerade dessen aufgestellte Öffnungslage bezogen auf Windkräfte kritisch ist.

Die im Ausführungsbeispiel veranschaulichte Ausgestaltung der Abstützung des Stellzylinders 12 in seiner der Druckbeaufschlagung entsprechenden Anschlaglage bei nach hinten oben aufgeschwenktem Heckdeckel 2 stellt eine für die Praxis zweckmäßige und preisgünstige Lösung dar, eine entsprechende schwenkwinkelabhängige Abstützung ließe sich im Rahmen der Erfindung aber auch durch entsprechenden seitlichen Eingriff eines dem Fußteil 35 zugehörigen Eingriffsgliedes 40 zum Beispiel in zumindest einen der Schenkel des Bügels 37 der Befestigungskonsole 36 erreichen.

In den Fig. 2 bis 6 ist, dem Stellzylinder 12 bzw. dessen Fußteil 35 zugeordnet, ferner ein Bügel 47 angedeutet, der als Befestigungselement für das zylinderseitige Ende des Zuggliedes 10 vorgesehen ist, das beispielsweise über ein entsprechendes Anschlussstück in den Schlitz 48 des Bügels eingehängt werden kann. über den Bügel lässt sich gegebenenfalls auch, bei entsprechender Bemessung, federnd eine Auffanglage für den in Schließrichtung verschwenkten Heckdeckel 2 realisieren, derart, dass dieser im Zugriffsbereich für das Regelglied 9 abgefangen und ausgehend von dieser Abfanglage über das Regelglied 9 in die in Fig. 1 dargestellte Verriegelungslage gezogen wird.

## Patentansprüche

1. Antriebsanordnung für einen Heckdeckel (2) eines Fahrzeugs mit offenem Aufbau, der zur Ablage des geöffneten Daches um eine in seinem rückwärtigen Endbereich liegende Schwenkachse in eine nach hinten oben aufgeschwenkte Öffnungslage über ein Linearstellglied (11) verstellbar ist, das über eine Drehschiebeführung (13) karosserieseitig angelenkt ist, die für einen Drehzapfen (14) eine Langlochführung (15) mit einander gegenüberliegenden und in Stellrichtung des Linearstellgliedes (11) beabstandeten, zug- und druckseitigen Anschlaglagen aufweist, deren bei ausgefahrenem Linearstellglied (11) gegebene, druckseitige Anschlaglage der nach hinten oben aufgeschwenkten Öffnungslage des Heckdeckels (2) entspricht,
**dadurch gekennzeichnet,**
**dass** das Linearstellglied (11) in seiner druckseitigen Anschlaglage zur Karosserie in Abhängigkeit vom Schwenkwinkel des Linearstellgliedes (11) über einen vorgegebenen Schwenkwinkelbereich **dadurch** formschlüssig gehalten ist, dass das Linearstellglied (11) und die Karosserie im Bereich der Drehschiebeführung (13) mit sich in Stellrichtung des Linearstellgliedes (11) gegeneinander abstützenden Halteteilen (Aufnahme 39, Eingriffsglied 40) versehen sind.

2. Antriebsanordnung nach Anspruch 1,
**dadurch gekennzeichnet,**
**dass** der vorgesehene Schwenkwinkelbereich einen Endbereich des Schwenkbereiches des Linearstellgliedes (11) überdeckt.

3. Antriebsanordnung nach Anspruch 1 oder 2,
**dadurch gekennzeichnet,**
**dass** die Halteteile (Aufnahme 39, Eingriffsglied 40) sich zueinander entgegengesetzt in Schwenkrichtung des Linearstellgliedes (11) erstrecken.

4. Antriebsanordnung nach einem der Ansprüche 1 bis 3,
**dadurch gekennzeichnet,**
**dass** in Abhängigkeit von Stellrichtung und/oder Schwenkrichtung des Linearstellgliedes (11) eine den Heckdeckel (2) in seiner Schließlage fixierende Verriegelungsvorrichtung (6) beaufschlagt ist.

## Claims

1. Drive arrangement for a rear cover (2) of a vehicle with an open body, which rear cover (2) is displaceable via a linear actuator (11) about a pivot axis located in its rearward end portion to a rearwardly and upwardly swivelled-open position for stowage of the open roof, which linear actuator (11) is articulated to the body via a rotating/sliding guide (13) which has a guide slot (15) for a pivot pin (14), which guide slot (15) has opposed pull and push abutment positions spaced apart in the actuation direction of the linear actuator (11), the abutment position of which in the push direction, occupied when the linear actuator (11) is extended, corresponds to the rearwardly and upwardly swivelled-open position of the rear cover (2), **characterized in that** the linear actuator (11) is retained positively with respect to the body in its abutment position in the push direction in dependence on the swivel angle of the linear actuator (11) over a predefined swivel-angle range by virtue of the fact that the linear actuator (11) and the body are provided in the region of the rotating/sliding guide (13) with retaining parts (receptacle 39, engagement member 40) which bear against one another in the actuation direction of the linear actuator (11).

2. Drive arrangement according to Claim 1, **characterized in that** the swivel-angle range provided coincides with an end region of the swivelling range of the linear actuator (11).

3. Drive arrangement according to Claim 1 or 2, **characterized in that** the retaining parts (receptacle 39, engagement member 40) extend oppositely to one another in the swivelling direction of the linear actuator (11).

4. Drive arrangement according to any one of claims 1 to 3, **characterized in that**, in dependence on the actuation direction and/or swivelling direction of the linear actuator (11), a locking device (6) which fixes the rear cover (2) in its closed position is impinged upon.

## Revendications

1. Ensemble d'entraînement pour un couvercle arrière (2) d'un véhicule de structure ouverte, qui peut être déplacé pour le rangement du toit ouvert autour d'un axe de pivotement situé dans sa région extrême arrière dans une position d'ouverture pivotée vers l'arrière et vers le haut par le biais d'un organe de commande linéaire (11) qui est articulé par le biais d'un guidage coulissant rotatif (13) du côté de la carrosserie, qui présente, pour un tourillon (14), un guidage par trou oblong (15) avec des positions de butée côté traction et côté pression opposées l'une à l'autre, espacées dans la direction de réglage de l'organe de commande linéaire (11), dont la position de butée côté pression, existant lorsque l'organe de commande linéaire (11) est sorti, correspond à la position d'ouverture du couvercle arrière (2) pivotée vers l'arrière et vers le haut,
**caractérisé en ce que**
l'organe de commande linéaire (11) est maintenu par engagement positif dans sa position de butée côté pression par rapport à la carrosserie en fonction de l'angle de pivotement de l'organe de commande linéaire (11) sur une plage angulaire de pivotement prédéfinie par le fait que l'organe de commande linéaire (11) et la carrosserie sont pourvus dans la région du guidage coulissant rotatif (13) de pièces de fixation (logement 39, organe d'engagement 40) s'appuyant l'une contre l'autre dans la direction de réglage de l'organe de commande linéaire (11).

2. Ensemble d'entraînement selon la revendication 1,
**caractérisé en ce que**
la plage angulaire de pivotement prévue couvre une plage extrême de la plage de pivotement de l'organe de commande linéaire (11).

3. Ensemble d'entraînement selon la revendication 1 ou 2,
**caractérisé en ce que**
les pièces de fixation (logement 39, organe d'engagement 40) s'étendent en sens inverse dans la direction de pivotement de l'organe de commande linéaire (11).

4. Ensemble d'entraînement selon l'une quelconque des revendications 1 à 3,
**caractérisé en ce**
**qu'**en fonction de la direction de réglage et/ou de la direction de pivotement de l'organe de commande linéaire (11), un dispositif de verrouillage (6) fixant le couvercle arrière (2) dans sa position de fermeture est sollicité.
